(19) Europäisches Patentamt
European Patent Office
Office européen des brevets

(11) EP 0 753 549 A2

(12) # EUROPÄISCHE PATENTANMELDUNG

(43) Veröffentlichungstag:
**15.01.1997 Patentblatt 1997/03**

(51) Int. Cl.[6]: **C09C 3/12**, C08K 9/06

(21) Anmeldenummer: **96109685.6**

(22) Anmeldetag: **17.06.1996**

(84) Benannte Vertragsstaaten:
**DE ES FR GB IT**

(30) Priorität: **28.06.1995 DE 19523470**
**28.12.1995 DE 19549034**

(71) Anmelder: **BAYER AG**
**51368 Leverkusen (DE)**

(72) Erfinder: **Scholl, Thomas, Dr.**
**51469 Bergisch Gladbach (DE)**

(54) **Oberflächenmodifizierte, oxidische oder silikatische Füllstoffe und ihre Verwendung**

(57) Die erfindungsgemäßen oberflächenmodifizierten Füllstoffe werden hergestellt durch Behandlung oxidischer oder silikatischer Füllstoffe mit einem Silan der Formel

$$R^1R^2R^3\,Si - X^1 - (-S_x - Y -)_m - (-S_x - X^2 - Si\,R^1R^2R^3)_n$$

und finden Verwendung zur Herstellung von Kautschukvulkanisaten, insbesondere Reifen, mit geringerer dynamischer Dämpfung und günstigem Abriebverhalten.



Printed by Rank Xerox (UK) Business Services
2.13.13/3.4

## Beschreibung

Die vorliegende Erfindung betrifft neue oberflächenmodifizierte, oxidische oder silikatische Füllstoffe und ihre Verwendung zur Herstellung von Kautschukmischungen und -vulkanisaten. Die mit diesen modifizierten Füllstoffen erhaltenen Kautschukmischungen eignen sich zur Herstellung von hochverstärkten, abriebbeständigen Formkörpern, insbesondere zur Herstellung von Reifen, die einen niedrigen Rollwiderstand und einen hohen Abriebwiderstand aufweisen.

Die Behandlung von Füllstoffoberflächen mit Organosiliciumverbindungen zur Verbesserung der Füllstoff-/Matrix-Ankopplung in thermoplastischen und duroplastischen Verbundwerkstoffen sowie gefüllten Kautschuksystemen ist bekannt. Für die Herstellung hochverstärkter und abriebbeständiger Kautschukartikel eignet sich besonders die in US-PS 4 514 231 und 4 704 414 beschriebene Behandlung von Füllstoffen mit Verbindungen der Struktur: $(R_n^1(RO)_{3-n}Si-(Alk)_m-Ar)_p)_2(S)_x$, insbesondere Bis-(triethoxisilylpropyl)-tetrasulfid. Unter den dort angegebenen Behandlungsbedingungen reagiert die Organosiliciumverbindung mit den Hydroxylgruppen der Füllstoffoberfläche.

Die Füllstoffe der US-PS 4 514 231 und 4 704 414 sind zwar schon erheblich aktiver als die unmodifizierten, es war jedoch das Ziel der vorliegenden Erfindung, den Verstärkungseffekt der oxidischen und silikatischen Füllstoffe noch weiter zu erhöhen, um so einerseits die technischen Eigenschaften der Gummiartikel zu verbessern und andererseits die Rohstoffkosten zur Herstellung gleicher Qualitäten zu senken. Aufgrund ihres geringen Dämpfungseffektes und des hohen Abriebwiderstandes eignen sich die neu gefundenen, oberflächenmodifizierten oxidischen oder silikatischen Füllstoffe insbesondere zur Herstellung von Kraftfahrzeugreifen mit geringem Rollwiderstand und hoher Laufleistung.

Gegenstand der vorliegenden Erfindung sind daher oberflächenbehandelte, oxidische oder silikatische Füllstoffe, erhältlich durch Umsetzung eines oxidischen oder silikatischen Füllstoffes mit einem Silan der Formel (I)

$$R^1R^2R^3\,Si - X^1 - (-S_x - Y -)_m - (-S_x - X^2 - Si\,R^1R^2R^3)_n \qquad (I),$$

worin

| | |
|---|---|
| $R^1$, $R^2$ und $R^3$ | gleich oder verschieden sind und $C_1$-$C_{18}$-Alkyl oder $C_1$-$C_{18}$-Alkoxi, die gegebenenfalls durch Sauerstoff-, Stickstoff- oder Schwefelatome unterbrochen sein können, $C_6$-$C_{12}$- Aryl oder -Aryloxi oder $C_7$-$C_{18}$-Alkylaryl oder-Alkylaryloxi bedeuten, mit der Maßgabe, daß mindestens einer der Reste $R^1$ bis $R^3$ eine Alkoxi-, Aryloxigruppe oder Alkylaryloxigruppe ist, |
| $X^1$ und $X^2$ | gleich oder verschieden sind und für lineare, verzweigte oder cyclische, gegebenenfalls ungesättigte, $C_1$-$C_{12}$-Alkylenreste stehen, |
| Y | für gegebenenfalls mit $C_6$-$C_{12}$-Aryl, $C_1$-$C_8$-Alkoxi- oder Hydroxigruppen substituierte lineare, verzweigte oder cyclische, gegebenenfalls ungesättigte, $C_1$-$C_{18}$-Alkylenreste steht, die gegebenenfalls durch Sauerstoff-, Schwefel- oder Stickstoffatome oder aromatische $C_6$-$C_{12}$-Gruppen unterbrochen sein können, oder für $C_6$-$C_{12}$-Arylengruppen oder Heteroarylengruppen steht, |
| m | für eine ganze Zahl von 1 bis 20 steht, |
| n | für eine ganze Zahl von 1 bis 6 steht und |
| x | eine Zahl von 1 bis 8 bedeutet, |

bei Temperaturen von 50 bis 220°C, gegebenenfalls im Vakuum, wobei 0,1 bis 25 Gew.-%, bezogen auf oxidischen oder silikatischen Füllstoff, an Silanen der Formel (I) eingesetzt werden.

Besonders bevorzugte erfindungsgemäße Silane sind z.B. solche der Formel (I), worin $X^1$ und $X^2$ Methylen-, Propylen-, Butylen-, Pentylen oder Hexylenreste und Y Methylen-, Ethylen-, Propylen-, Butylen-, Hexylen-, Cyclohexylen-, Octylen-, Decyclen-, Dodecyclen-, 2,2'-Oxidiethylen-, Methylen-bis-(2,2'-oxiethylen)-, Ethylen-(bis-2,2'-oxiethylen)-, 1,1'-Thiodiethylen-, N-Methyl-N',N"-diethylen-, oder $\alpha,\alpha'$-p-Xylidenreste oder höherwertige Reste, wie 1,2,3-Propyliden-, N,N',N"-Triethylen- oder 1,3,5-s-Triazinylreste, darstellen, und in denen n ganze Zahlen von 1 bis 6, X Zahlen von 2 bis 6 und m ganze Zahlen von 1 bis 10 bedeuten. Die erfindungsgemäßen Silane können sowohl als einzelne Verbindung mit einem definierten Molgewicht als auch als Oligomerengemisch mit einer Molgewichtsverteilung eingesetzt werden. Aus verfahrenstechnischen Gründen ist es in vielen Fällen einfacher, ein Oligomeren- oder Polymerengemisch herzustellen und einzusetzen. Die Verbindungen besitzen ein Molgewicht zwischen ca. 500 und 8 000.

Die Herstellung der erfindungsgemäßen Silane (I) kann auf verschiedene Weise erfolgen:

A: Durch Umsetzung von Mercaptogruppen-haltigen Silanen und Di-, und/oder Polymercaptanen mit Schwefeldichlorid oder Dischwefeldichlorid unter Abspaltung von HCl. Die Reaktion kann in an sich bekannter Art und Weise bei Temperaturen von -30 bis +80°C, gegebenenfalls in Lösungsmitteln, wie Alkoholen oder aromatischen Kohlenwasserstoffen durchgeführt werden:

$$R^1R^2R^3Si\text{-}X\text{-}SH + HS\text{-}Y\text{-}SH + S_x\text{-}Cl_2 \rightarrow R^1R^2R^3Si\text{-}X\text{-}S_{x+2}(Y\text{-}S_{x+2})_m\text{-}X\text{-}SiR^1R^2R^3 + HCl$$

(Zur Durchführung der Reaktion siehe z.B. Houben Weyl, Methoden der organischen Chemie, Band 9, Seite 88 ff. (1955) und Band E 11 (1985), Thieme Verlag, Stuttgart.)

B: In besonders vorteilhafter Weise gelingt die Herstellung der Verbindungen (I), wenn man Halogenalkylsilylether und Polyhalogenide mit Metallpolysulfiden in Gegenwart von alkoholischen Lösungsmitteln bei Temperaturen von -20 bis +120°C umsetzt:

$$R^1R^2R^3Si\text{-}X\text{-}Hal + Hal\text{-}Y\text{-}Hal + Na_2S_x \rightarrow R^1R^2R^3Si\text{-}X\text{-}S_x(X\text{-}S_x)_m\text{-}X\text{-}SiR^1R^2R^3 + NaHal$$

Als Metallpolysulfide werden bevorzugt solche der Formel $Me_2S_x$ eingesetzt, in der Me für Lithium, Natrium oder Kalium steht, und x eine Zahl zwischen 2 und 6 bedeutet.

Als Lösungsmittel werden bevorzugt Alkohole eingesetzt, wie Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol, 1,6-Hexandiol sowie Gemische dieser Alkohole mit aromatischen, aliphatischen oder cycloaliphatischen Kohlenwasserstoffen, wie z.B. Toluol, Cyclohexan, Hexan, Octan oder offenkettige oder cyclische Ether, wie z.B. Diethylether, Dibutylether, Tetrahydrofuran, 1,3-Dioxolan und deren Gemische mit Alkoholen.

Besonders bevorzugte Silane entsprechen den Formeln

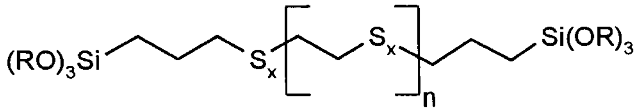 II

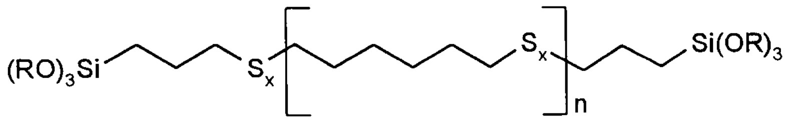 III

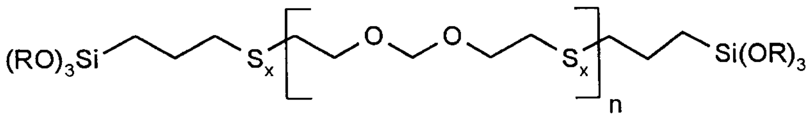 IV

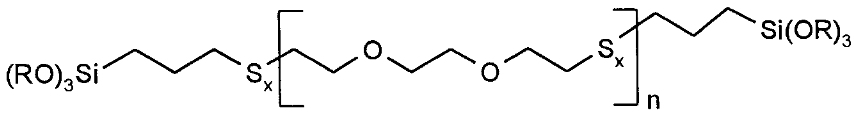 V

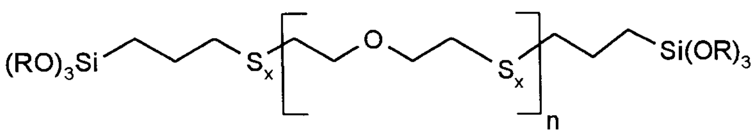 VI

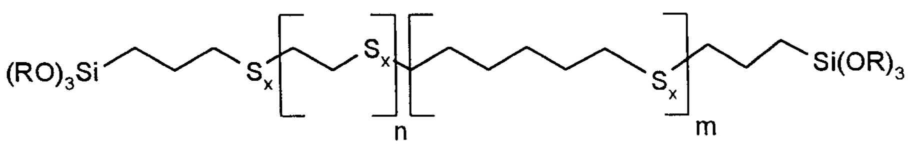 VII,

worin

R = $CH_3$, $C_2H_5$,

x = 1 - 8,

n = 1 - 10,

m = 1 - 10 ist,

sowie

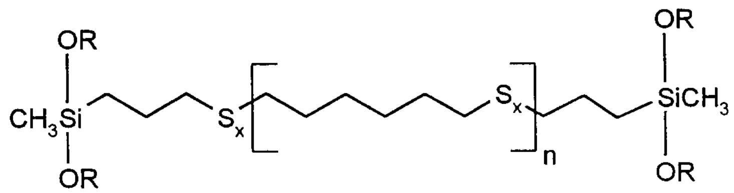

VIII

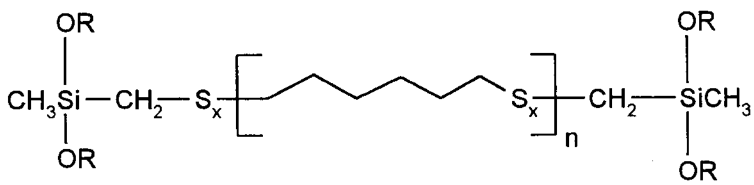

IX

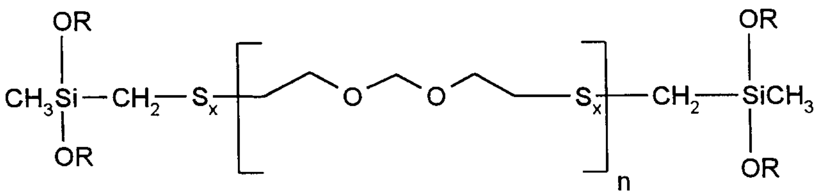

X,

worin

R = $CH_3$, $C_2H_5$,

x = 1 - 8,

n = 1 - 10 ist.

Unter oxidischen und silikatischen Füllstoffen sind alle bekannten natürlichen oder synthetischen anorganischen Füllstoffe zu verstehen, die aufgrund eines Gehalts an Hydroxylgruppen und/oder Hydratwasser oberflächlich mit den Silanen (I) reagieren können. Dies sind beispielsweise gefällte oder pyrogene Kieselsäure, Aluminiumhydroxid, Aluminiumsilikat, Calciumsilikat, Calciumsulfat, China Clay und/oder calcinierter Clay.

Besonders bevorzugt sind:

- Hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 $m^2/g$ (BET-Oberfläche), und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Ti-oxiden, vorliegen.

- Synthetische Silikate, wie Aluminiumsilikat, Erdalkalisilikate, wie Magnesiumsilikat oder Calciumsilikat, mit BET-Oberflächen von 20 bis 400 $m^2/g$ und Primärteilchendurchmessern von 10 bis 400 nm.

- Natürliche Silikate, wie Kaolin und andere natürlich vorkommende Kieselsäuren.

- Glasfasern und Glasfaserprodukte (Matten, Stränge) oder Mikroglaskugeln.

Die Behandlung der Füllstoffe mit den oligomeren Silanen der Formel (I) kann in Substanz, in organischen Lösungsmitteln oder in wäßriger Dispersion, unter Normaldruck oder im Vakuum, bei Temperaturen von 50 bis 220°C, bevorzugt bei 50 bis 130°C, erfolgen. Hierbei können gegegebenenfalls weitere Verbindungen anwesend sein, die mit der Füllstoffoberfläche physikalisch oder chemisch wechselwirken, wie z.B. schwefelfreie Alkylsilylether, hydroxylgruppenhaltige Polysiloxane, Alkylpolyglykolether und Stearinsäure. Der bei der Reaktion entstehende Alkohol wird aus dem Reaktionsprodukt möglichst entfernt, er kann jedoch auch ohne Wirkungsverlust im Produkt verbleiben, da es sich um eine irreversible Reaktion handelt. Die Entfernung des Alkohols geschieht vorteilhafterweise sofort während der Reaktion, gegebenenfalls zusammen mit Wasser, oder in einem nachgeschalteten Trocknungsschritt.

Geeignete Lösungsmittel zur Durchführung der Oberflächenmodifizierung sind beispielsweise aliphatische oder aromatische Kohlenwasserstoffe, chlorierte aliphatische oder chlorierte aromatische Kohlenwasserstoffe, Alkohole, Ether oder Carbonsäureamide. Insbesondere Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol, 1,6-Hexandiol sowie Gemische dieser Alkohole mit aromatischen, aliphatischen oder cycloaliphatischen Kohlenwasserstoffen, wie z.B. Toluol, Cyclohexan, Hexan, Octan oder offenkettige oder cyclische Ether, wie z.B. Diethylether, Dibutylether, Tetrahydrofuran, 1,3-Dioxolan und deren Gemische mit Alkoholen oder Amide, wie Dimethylformamid und Dimethylacetamid, sind geeignet.

In einer bevorzugten Variante werden die Verbindungen (I) als wäßrige Dispersion zu dem reinen Füllstoff oder zu einer wäßrigen Suspension des Füllstoffes gegeben und anschließend durch Erwärmen auf etwa 50 bis 220°C der Alkohol und das Wasser gegebenenfalls durch Anlegen von Vakuum entfernt. In einer anderen Verfahrensvariante gibt man die Verbindungen (I), gegebenenfalls als Dispersion, zu einer Suspension des Füllstoffs, erhitzt auf 50 bis 100°C, filtriert und trocknet anschließend bei 50 bis 220°C, gegebenenfalls im Vakuum. Sprühtrocknung eignet sich ebenfalls.

Die Herstellung der Dispersionen der Silane der Formel (I) kann z.B. mit Hilfe bekannter Dispergiergeräte, wie Ultraturrax, Scherblatt- und Scherspalt-Dissolver, gegebenenfalls in Gegenwart von Tensiden bei Temperatur von Raumtemperatur (ca. 20°C) bis 100°C erfolgen. Als Tenside seien genannt: Polyether, wie z.B. Polyethylenoxide mit einem mittleren Molgewicht von 1 000 bis 4 000, Alkylphenolpolyglykolether, wie z.B. dem Addukt von 10 Mol Ethylenoxid pro Mol Nonylphenol, Alkylpolyglykolether, wie z.B. dem Addukt von 7 Mol Ethylenoxid an 1-Dodecanol, sulfonierte Alkylaromaten, wie z.B. Dodecylbenzolsulfonsäure-Na-Salz, sulfonierte Aliphaten, wie z.B. Dioctylsulfosuccinat, Sulfate, wie z.B. Laurylsulfat, Ammoniumsalze, wie z.B. Cetyltrimethylammoniumchlorid.

Bevorzugte Feststoffgehalte an Silanen (I) in der Dispersion liegen bei 0,1 bis 85 Gew.-%, besonders bevorzugt 5 bis 50 Gew.-%, bezogen auf das Gesamtgewicht der Dispersion. Bevorzugte Gehalte an Emulgator liegen bei 0,1 bis 50 Gew.-%, besonders bevorzugt bei 1 bis 15 Gew.-%, jeweils bezogen auf das Gesamtgewicht der Dispersion.

In einer weiteren bevorzugten Variante wird die Oberflächenbehandlung der oxidischen oder silikatischen Füllstoffe in Gegenwart von Kautschuklösungen oder Kautschuklatices, gegebenenfalls noch in Gegenwart von weiteren, chemisch nicht reagierenden Füllstoffen, insbesondere Rußen, unter Bildung von sogenannten Kautschuk/Füllstoff-Masterbatchen durchgeführt. Hierbei wird eine Lösung oder wäßrige Dispersion des Silans (I) in Gegenwart einer Kautschuklösung oder einem Kautschuklatex, gegebenenfalls in Gegenwart weiterer chemisch nicht reagierender Füllstoffe, mit einem oxidischen Füllstoff, gegebenenfalls in wäßriger Suspension, zur Reaktion gebracht und anschließend durch Eindampfen, Sprühtrocknung oder Filtration und Trocknung isoliert. Der Gehalt an Füllstoffen kann hierbei in weiten Grenzen variiert werden, insbesondere bis zu Gehalten von 150 Gew.-Teilen oberflächenbehandelten Füllstoffs in 100 Gew.-Teilen Kautschuk, bevorzugt 30 bis 100 Gew.-Teilen Füllstoff pro 100 Gew.-Teile Kautschuk.

Als Kautschuke zur Herstellung derartiger Füllstoff-/Kautschuk-Masterbatche eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR | - Polybutadien |
| ABR | - Butadien/Acrylsäure-$C_{1-4}$-alkylester-Copolymere |
| CR | - Polychloropren |
| IR | - Polyisopren |
| SBR | - Styrol/Butadien-Copolymerisate mit Styrolgehalten von 1 bis 60, vorzugsweise 20 bis 50 Gew.-% |
| XSBR | - Styrol/Butadien-Copolymerisate und Pfropfpolymerisate mit weiteren ungesättigten polaren Monomeren, wie z.B. Acrylsäure, Methacrylsäure, Acrylnitril, Hydroxyethylacrylat und -methacrylat mit Gehalten an einpolymerisierten polaren Momomeren von 1-30 Gew.-% |
| IIR | - Isobutylen/Isopren-Copolymerisate |
| NBR | - Butadien/Acrylnitril-Copolymere mit Acrylnitrilgehalten von 5 bis 60, vorzugsweise 10 bis 50 Gew.-% |
| HNBR | - teilhydrierter oder vollständig hydrierter NBR-Kautschuk |
| EPDM | - Ethylen/Propylen/Dien-Copolymerisate |

Die Herstellung von Kautschukvulkanisaten aus den erfindungsgemäßen oberflächenbehandelten Füllstoffen, den Kautschuken und gegebenenfalls bekannten, zusätzlichen Kautschukhilfsmitteln kann nach den in der Praxis bekannten Methoden und Techniken geschehen; beispielsweise indem man Füllstoff, Kautschuk und gegebenenfalls weitere Hilfsmittel in einem Innenmischer bei Temperaturen von 100 bis 180°C mischt und anschließend bei 50 bis 120°C das Vernetzungssystem (Vulkanisationsmittel) zumischt. Dabei können neben den erfindungsgemäßen oberflächenbehandelten Füllstoffen noch andere aktive oder inaktive Füllstoffe verwendet werden. Besonders bevorzugt werden Ruße oder oberflächlich nicht modifizierte Kieselsäure als weitere Füllstoffe zugesetzt. Die hierbei zu verwendenden Ruße sind nach dem Flammruß-, Furnace- oder Gasruß-Verfahren hergestellt und besitzen BET-Oberflächen von 20 bis 300 $m^2/g$, wie z.B. SAF-, ISAF-, IISAF-, HAF-, FEF- oder GPF-Ruße.

Besonders bevorzugte Kautschukmischungen enthalten 10 bis 150 Teile helle Füllstoffe, gegebenenfalls zusammen mit 0 bis 100 Gew.-Teilen Ruß, jeweils bezogen auf 100 Gew.-Teile Kautschuk, sowie gegebenenfalls weitere Kautschukhilfsmittel in Mengen von 0,1 bis 50 Gew.-%..

Für die Herstellung von Kautschukvulkanisaten mit Hilfe der oberflächenmodifizierten Füllstoffe eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR | - Polybutadien |
| ABR | - Butydien/Acrylsäure-$C_{1-4}$-alkylester-Copolymere |
| CR | - Polychloropren |
| IR | - Polyisopren |
| SBR | - Styrol/Butadien-Copolymerisate mit Styrolgehalten von 1 bis 60, vorzugsweise 2 bis 50 Gew.-% |
| XSBR | - Styrol/Butadien-Copolymerisate und Pfropfpolymerisate mit weiteren ungesättigten polaren Monomeren, wie z.B. Acrylsäure, Methacrylsäure, Acrylnitril, Hydroxyethylacrylat und -methacrylat mit Gehalten an einpolymerisierten polaren Momomeren von 1-30 Gew.-% |
| IIR | - Isobutylen/Isopren-Copolymerisate |
| NBR | - Butadien/Acrylnitril-Copolymere mit Acrylnitrilgehalten von 5 bis 60, vorzugsweise 10 bis 50 Gew.-% |
| HNBR | - teilhydrierter oder vollständig hydrierter NBR-Kautschuk |
| EPDM | - Ethylen/Propylen/Dien-Copolymerisate |

sowie Mischungen dieser Kautschuke. Für die Herstellung von Kfz-Reifen mit Hilfe der oberflächenmodifizierten Füllstoffe sind insbesondere anionisch polymerisierte L-SBR-Kautschuke mit einer Glastemperatur oberhalb von -50°C, die gegebenenfalls mit Silylethern oder anderen funktionellen Gruppen modifiziert sein können, wie sie z.B. in der EP-A 447 066 beschrieben sind, sowie deren Mischungen von Dienkautschuken von Interesse.

Die erfindungsgemäßen Kautschukvulkanisate können wie erwähnt weitere Kautschukhilfsmittel enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, Bis-(triethoxisilylpropyl)tetrasulfid, Tenside und Emulgatoren, wie dem Addukt von 5-10 Mol Ethylenoxid an Dedecanol, schwefelfreie Silane, wie Octadecyl-triethoxisilan und Hydroxylgruppenhaltige Polydimethylsiloxane, die in der Gummiindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf eingesetzten Kautschuk.

Als bekannte Vernetzer (Vulkanisationsmittel) können Schwefel, Schwefelspender oder Peroxide eingesetzt werden. Die erfindungsgemäßen Kautschukmischungen können darüberhinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vernetzungsbeschleuniger und Vernetzer, wie Schwefel oder Peroxide werden in Mengen von jeweils 0,1 bis 10 Gew.-%, bevorzugt 0,1 bis 5 Gew.-%, bezogen auf eingesetzten Kautschuk.

Die Vulkanisation kann bei Temperaturen von 100 bis 200°C, bevorzugt 130 bis 180°C, gegebenenfalls unter Druck von 10 bis 200 bar, erfolgen.

Die Abmischung der Kautschuke mit den oberflächenmodifizierten Füllstoffen kann in üblichen Mischaggregaten, wie Walzen, Innenmischern und Mischextrudern, durchgeführt werden.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen.

**<u>Beispiele</u>**

**Herstellung von Silanen der Formel (I):**

**Beispiel 1**

$$(EtO)_3Si\text{-}CH_2CH_2CH_2\text{-}(S_4\text{-}CH_2CH_2\text{-}O\text{-}CH_2\text{-}O\text{-}CH_2CH_2)_n\text{-}S_4\text{-}CH_2CH_2CH_2\text{-}Si(OEt)_3$$

mit $\overline{n} = 2$

117 g (1,5 mol) wasserfreies $Na_2S$ wurde mit 144 g (4,5 mol) Schwefel in einem Lösungsmittelgemisch aus 400 ml Ethanol und 400 ml Toluol 1 Stunde zum Rückfluß erhitzt. Dann setzte man erst 240,4 g (1 mol) 3-Chlorpropyltriethoxisilan und nach einer Stunde Erhitzen am Rückfluß 173,0 g (1 mol) Bis-(2-chlorethyl-)formal hinzu. Nach 10stündigem Nachrühren wurde filtriert und die Lösung im Vakuum eingedampft. Man erhielt 475 g eines braunen Öls mit einer Viskosität von 200 mPa • s (25°C).

| Elementaranalyse: | | | | | |
|---|---|---|---|---|---|
| | C | H | S | Si | |
| ber.: | 33,7 | 6,2 | 38,5 | 5,8 | % |
| gef.: | 33,4 | 6,3 | 39,0 | 5,3 | % |

**Beispiel 2**

$$(EtO)_3Si\text{-}CH_2CH_2CH_2\text{-}(S_4\text{-}CH_2CH_2\text{-}O\text{-}CH_2\text{-}O\text{-}CH_2CH_2)_n\text{-}S_4\text{-}CH_2CH_2CH_2\text{-}Si(OEt)_3$$

mit $\bar{n} = 3$

Es wurde wie in Beispiel 1 verfahren. Man setzte dabei 117 g (1,5 mol) wasserfreies Natriumsulfid mit 144 g (4,5 mol) Schwefel, 183,9 g (0,765 mol) 3-Chlorpropyltriethoxisilan und 197,5 g (1,142 mol) Bis-(2-chlorethyl-)formal um. Man erhielt 453 g eines braunen Öls mit der Viskosität 500 mPa • s (25°C).

| Elementaranalyse: | | | | | |
|---|---|---|---|---|---|
| | C | H | S | Si | |
| ber.: | 32,2 | 5,9 | 41,7 | 4,6 | % |
| gef.: | 32,4 | 5,9 | 41,2 | 4,4 | % |

**Beispiel 3**

$$(EtO)_3Si\text{-}CH_2CH_2CH_2\text{-}S_4\text{-}(CH_2CH_2\text{-}O\text{-}CH_2\text{-}O\text{-}CH_2CH_2)_n\text{-}S_4\text{-}CH_2CH_2CH_2\text{-}Si(OEt)_3$$

mit $\bar{n} = 4$

Es wurde wie in Beispiel 1 verfahren. Dabei setzte man 97,5 g (1,25 mol) wasserfreies Natriumsulfid mit 120 g (3,75 mol) Schwefel, 120 g (0,5 mol) 3-Chlorpropyltriethoxisilan und 173 g (1 mol) Bis-(2-chlorethyl-)formal um. Man erhielt 351 g eines braunen Öls mit der Viskosität 880 mPa • s (25°C).

| Elementaranalyse: | | | | | |
|---|---|---|---|---|---|
| | C | H | S | Si | |
| ber.: | 31,3 | 5,6 | 43,9 | 3,8 | % |
| gef.: | 31,3 | 5,6 | 41,6 | 4,0 | % |

**Beispiel 4**

$$(EtO)_3Si\text{-}CH_2CH_2CH_2\text{-}(S_4\text{-}CH_2CH_2\text{-}O\text{-}CH_2CH_2\text{-}O\text{-}CH_2CH_2)_n\text{-}S_4\text{-}CH_2CH_2CH_2\text{-}Si(OEt)_3$$

mit $\bar{n} = 2$

Es wurde wie in Beispiel 1 verfahren. Dabei setzte man 58,5 g (0,75 mol) wasserfreies Natriumsulfid in 500 ml Ethanol mit 72 g (2,25 mol) Schwefel, 120,2 g (0,5 mol) 3-Chlorpropyltriethoxisilan und 93,5 g (0,5 mol) 1,2-Bis-chlorethoxiethan um. Man erhielt 223 g eines braunen Öls.

| Elementaranalyse: | | | | | |
|---|---|---|---|---|---|
| | C | H | S | Si | |
| ber.: | 35,1 | 6,4 | 37,4 | 5,5 | % |
| gef.: | 35,3 | 6,5 | 36,5 | 6,0 | % |

**Beispiel 5**

$$(EtO)_3Si\text{-}CH_2CH_2CH_2\text{-}(S_4\text{-}CH_2CH_2\text{-}CH_2CH_2\text{-}CH_2CH_2)_n\text{-}S_4\text{-}CH_2CH_2CH_2\text{-}Si(OEt)_3$$

mit $\bar{n} = 3$

Es wurde wie in Beispiel 1 verfahren. Dabei setzte man 234 g (3 mol) wasserfreies Natriumsulfid in 1020 ml Ethanol und 441 ml Toluol mit 288 g (9 mol) Schwefel, 367,8 g (1,53 mol) 3-Chlorpropyltriethoxisilan und 355,9 g (2,295 mol) 1,6-Dichlorhexan um. Man erhielt 861 g eines braunen Öls.

| Elementaranalyse: | | | | | |
|---|---|---|---|---|---|
| | C | H | S | Si | |
| ber.: | 36,8 | 6,6 | 43,6 | 4,8 | % |
| gef.: | 36,7 | 6,5 | 43,2 | 4,7 | % |

**Herstellung der erfindungsgemäßen oberflächenmodifizierten oxidischen oder silikatischen Füllstoffe:**

**Beispiel 6**

40,6 g der Verbindung Beispiel 2 wurden in 200 ml Toluol gelöst. Diese Lösung setzte man unter Rühren zu einer Suspension von 500 g Vulkasil S (hochaktive gefällte Kieselsäure, BET-Oberfläche ca. 180 $m^2/g$, Bayer AG) in 4 l Toluol. Anschließend destillierte man das Lösungsmittel bei 110 bis 130°C ab, zum Schluß im Vakuum (20 mm Hg).

**Beispiel 7**

40,6 g der Verbindung gemäß Beispiel 5 wurden mit 10 g eines Addukts von 10 mol Ethylenoxid an Nonylphenol in 360 g Wasser mit einem Ultraturrax emulgiert. Diese Dispersion setzte man unmittelbar anschließend zu einer Suspension von 500 g Vulkasil S in 5 l Wasser und erhitzte unter Rühren 1 Stunde auf 90°C. Dann wurd filtriert und der Rückstand bei 110 bis 130°C getrocknet, zum Schluß im Vakuum (20 mm Hg).

**Beispiel 8 (Vergleichsbeispiel):**

Es wurde wie in Beispiel 7 verfahren, wobei jedoch die Verbindung gemäß Beispiel 5 durch die gleiche Menge Bis-(triethoxysilylpropyl)-tetrasulfid (gemäß US-PS 4.514.231 bzw. 4.704.414) ersetzt wurde.

**Herstellung von Kautschukvulkanisaten mit den erfindungsgemäßen Füllstoffen:**

| Zusammensetzung | A | B | Vergleich |
|---|---|---|---|
| Die folgenden Kautschukmischungen wurden im Innenmischer bei 130°C hergestellt. Die Mengen sind als Gewichtsteile angegeben: | | | |
| S-SBR-Kautschuk Buna VSL 1954 S 25 (Bayer AG) | 75 | 75 | 75 |
| BR-Kautschuk Buna CB 11 (Bayer AG) | 25 | 25 | 25 |
| Kieselsäure gemäß Beispiel 6 | 86,5 | 0 | 0 |
| Kieselsäure gemäß Beispiel 7 | 0 | 86,5 | 0 |
| Kieselsäure gemäß Beispiel 8 (Vergleich) | 0 | 0 | 86,5 |
| Ruß Corax N 339 | 6 | 6 | 6 |
| aromat. Öl Renopal 450 (Rheinchemie) | 32,5 | 32,5 | 32,5 |
| Zinkoxid | 2,5 | 2,5 | 2,5 |
| Stearinsäure | 1 | 1 | 1 |
| Antioxidans Vulkanox 4020 (Bayer AG) | 1 | 1 | 1 |
| Ozonschutzwachs Antilux 654 (Rheinchemie) | 1,5 | 1,5 | 1,5 |
| anschließend wurde auf der Walze bei 50°C Schwefel und Beschleuniger zugemischt: | | | |
| Schwefel | 1,5 | 1,5 | 1,5 |
| N-Cyclohexyl-mercaptobenzthiazol-sulfenamid | 1,5 | 1,5 | 1,5 |
| Diphenylguanidin Vulkacit DPG (Bayer) | 2 | 2 | 2 |

Darauf wurden die Kautschukmischungen 40 Minuten vulkanisiert bei 160°C.

| Vulkanisationseigenschaften: | A | B | Vergleich |
|---|---|---|---|
| Spannungswert bei 300 % Dehnung (MPa) | 14,6 | 13,6 | 12,2 |
| Zugfestigkeit (MPa) | 17,6 | 18,3 | 18 |
| Bruchdehnung (%) | 356 | 392 | 410 |
| Härte (Shore A) | 77 | 76 | 71 |
| Elastizität bei 70°C (%) | 45 | 47 | 44 |
| tan delta bei 60°C | 0,119 | 0,108 | 0,131 |

## Patentansprüche

1. Oberflächenmodifizierte, oxidische oder silikatische Füllstoffe, erhältlich durch Umsetzung eines oxidischen oder silikatischen Füllstoffes mit einem Silan der Formel (I)

$$R^1R^2R^3\,Si - X^1 - (-S_x - Y -)_m - (-S_x - X^2 - Si\,R^1R^2R^3)_n \qquad (I),$$

worin

| | |
|---|---|
| $R^1$, $R^2$ und $R^3$ | gleich oder verschieden sind und $C_1$-$C_{18}$-Alkyl oder $C_1$-$C_{18}$-Alkoxi, die gegebenenfalls durch Sauerstoff, Stickstoff- oder Schwefelatome unterbrochen sein können, $C_6$-$C_{12}$-Aryl oder - Aryloxi oder $C_7$-$C_{18}$-Alkylaryl oder Alkylaryloxi bedeuten, mit der Maßgabe, daß mindestens einer der Reste $R^1$ bis $R^3$ eine Alkoxi-, Aryloxigruppe oder Alkylaryloxigruppe ist, |
| $X^1$ und $X^2$ | gleich oder verschieden sind und für lineare, verzweigte oder cyclische, gegebenenfalls ungesättigte, $C_1$-$C_{12}$-Alkylenreste stehen, |
| Y | für gegebenenfalls mit $C_6$-$C_{12}$-Aryl, $C_1$-$C_8$-Alkoxi oder Hydroxigruppen substituierte lineare, verzweigte oder cyclische, gegebenenfalls ungesättigte, $C_1$-$C_{18}$-Alkylenreste steht, die gegebenenfalls durch Sauerstoff-, Schwefel- oder Stickstoffatome oder aromatische $C_6$-$C_{12}$-Gruppen unterbrochen sein können, oder für $C_6$-$C_{12}$-Arylengruppen oder Heteroarylengruppen steht, |
| m | für eine ganze Zahl von 1 bis 20 steht, |
| n | für eine ganze Zahl von 1 bis 6 steht und |
| x | eine Zahl von 1 bis 8 bedeutet, |

bei Temperaturen von 50 bis 220°C, gegebenenfalls im Vakuum, wobei 0,1 bis 25 Gew.-%, bezogen auf oxidischen oder silikatischen Füllstoff, an Silanen der Formel (I) eingesetzt werden.

2. Verwendung der oberflächenmodifizierten Füllstoffe gemäß Anspruch 1 zur Herstellung von Kautschukmischungen oder Kautschukvulkanisaten.